Europäisches Patentamt

European Patent Office

Office européen des brevets

(11) Veröffentlichungsnummer: **0 204 881**
A1

(12) **EUROPÄISCHE PATENTANMELDUNG**

(21) Anmeldenummer: **86100814.2**

(22) Anmeldetag: **22.01.86**

(51) Int. Cl.⁴: **F 16 K 11/00**

(30) Priorität: **18.03.85 DE 3509648**

(43) Veröffentlichungstag der Anmeldung:
**17.12.86 Patentblatt 86/51**

(84) Benannte Vertragsstaaten:
**AT BE CH DE FR GB IT LI NL SE**

(71) Anmelder: **IDEAL-STANDARD GMBH**
**Euskirchener Strasse 80**
**D-5300 Bonn 1(DE)**

(72) Erfinder: **Mönch, Heiner, Dipl.-Ing.**
**in der Neuwies 1**
**D-5559 Kenn(DE)**

(54) **Mischbatterie.**

(57) Die Erfindung sieht eine Mischbatterie vor, insbesondere eine Einhebelmischbatterie für Spültische oder dergl., mit einem Batteriegehäuse (10,4,7), in dem ein mit einem Anschlußröhrchen (36) für das warme Wasser, einem Anschlußröhrchen (37) für das kalte Wasser und mindestens einem Anschlußröhrchen (39) für den Anschluß einer Haushaltsmaschine versehenes Einsatzstück (12) angeordnet ist, welches mit einem Absperrventil für den Anschluß der Haushaltsmaschine in Verbindung steht, dadurch gekennzeichnet, daß das Absperrventil (13) an oder in dem Einsatzstück (12) gehalten und mit diesem in dem Batteriegehäuse (10,4,7) angeordnet ist, und daß für die Betätigung des Absperrventils (13) ein am Umfang der Mischbatterie befindliches Betätigungsorgan (7) vorgesehen ist.

./...

Croydon Printing Company Ltd.

EP 0 204 881 A1

Fig. 1

Die Erfindung betrifft eine Mischbatterie, insbesondere Einhebelmischbatterie für Spültische oder dergl., mit einem Batteriegehäuse, in dem ein mit einem Anschlußröhrchen für das warme Wasser, einem Anschlußröhrchen für das kalte Wasser und mindestens einem Anschlußröhrchen für den Anschluß einer Haushaltsmaschine versehenes Einsatzstück angeordnet ist.

Aus der EP-0071729 ist eine Einloch-Mischbatterie mit einem am Batteriekörper angeformten Einsteckstutzen bekannt, mit einer Mischvorrichtung für das einem Auslauf zugeführte Wasser und mit einem zusätzlichen Anschluß für eine Haushaltsmaschine mit einer Ventileinrichtung, wobei die Kanäle für den Warm- und Kaltwasserzulauf und der Kanal für den zusätzlichen Anschluß im Einsteckstutzen angeordnet sind, und wobei die Mischvorrichtung für das dem Auslauf zugeführte Mischwasser als aus nur einem Ventil bestehender Einhandmischer ausgebildet ist und das am Batteriekörper ansonsten nötige zweite Ventil für den Maschinenanschluß vorgesehen ist.

Bei einer derartigen Einloch-Mischbatterie ist nachteilig, daß das zweite Ventil für den Maschinenanschluß am Batteriekörper angeordnet ist, was fertigungstechnisch aufwendig und platzraubend ist. Hinzu kommt, daß derartige Konstruktionen den Gestaltungsfreiraum optisch und technisch vergleichsweise stark einengen.

Aus der DE-OS 32 43 750 ist eine Einloch-Einhebelmischbatterie mit einem die durch den Hebel betätigbare Mischeinrichtung aufnehmenden Batteriegehäuse bekannt, an welchem ein die Zuleitungen für Kalt- und Warmwasser sowie mindestens eine mit einer der Zuleitungen in Verbindung stehende Geräteanschlußleitung enthaltender Einsteckstutzen und ein in dem Bereich zwischen der Mischeinrichtung und dem Einsteckstutzen gelegenes Absperrventil zum Unterbrechen des Wasser- übertritts von der betreffenden Zuleitung in die Geräteanschlußleitung vorgesehen sind.      Das Absperrventil ist in einem den genannten Bereich dicht umschließenden separaten Ring angeordnet. Auch hierbei gelten überwiegend die zu der EP-0071729 genannten Nachteile, und zwar deshalb, weil das Absperrventil an der Mischbatterie angeordnet ist.

Der Erfindung liegt die Aufgabe zugrunde, diese Nachteile zu beseitigen und eine Mischbatterie der eingangs genannten Art zu schaffen, die einfach im Aufbau und sicher in der Wirkungsweise ist.

Gelöst wird die Aufgabe dadurch, daß das Absperrventil an oder in dem Einsatzstück gehalten und mit diesem in dem Batteriegehäuse angeordnet ist, und daß für die Betätigung des Absperrventils ein am Umfang der Mischbatterie befindliches Betätigungsorgan vorgesehen ist.

Bevorzugte Ausführungsformen der Erfindung sind in den Ansprüchen gekennzeichnet.

Bei einer erfindungsgemäßen Mischbatterie ist das Absperrventil für den Anschluß einer oder mehrerer Haushaltsmaschinen ein vom Batteriegehäuse getrenntes Bauteil, welches ebenso wie das Einsatzstück von dem Batteriegehäuse umschlossen ist, das sehr einfach aufgebaut, leicht zu fertigen und zu montieren ist und gegenüber dem Absperrventil keiner Abdichtung bedarf. Selbst gegenüber dem Einsatzstück ist eine Abdichtung dann nicht erforderlich, wenn der Batterieauslauf lediglich zur Aufnahme eines Brauseschlauches dient.

In der Zeichnung ist der Erfindungsgegenstand in einem
Ausführungsbeispiel dargestellt; und zwar zeigen:

Fig.   1   eine Einhebelmischbatterie im Längsschnitt,

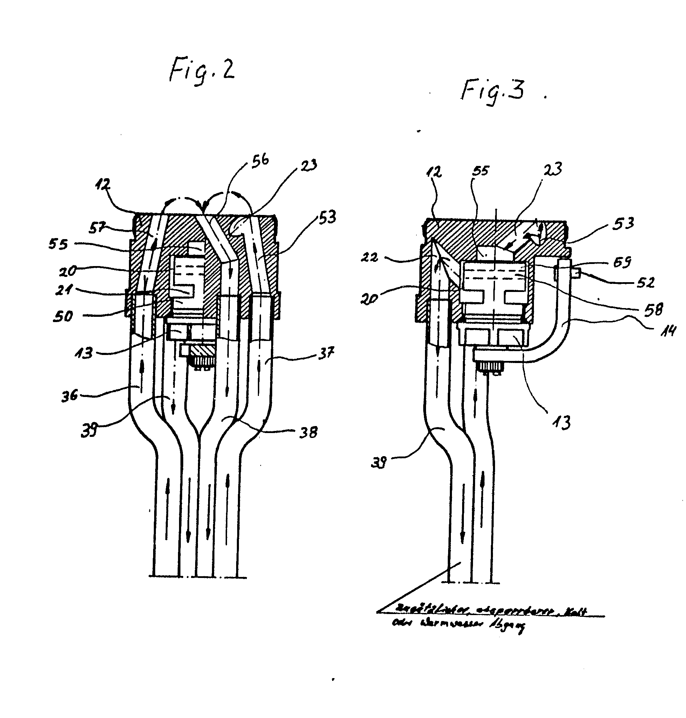

Fig.   2   eine Ansicht des Einsatzstückes mit Absperrventil und Anschlußröhrchen gemäß Fig. 1,
           teilweise im Schnitt,

Fig.   3   eine Seitenansicht zu Fig. 2, teilweise
           im Schnitt.

Die Einhebelmischbatterie ist mit einem Griffhebel 1 zur
Einstellung der Mischwassermenge und Mischwassertemperatur,
insbesondere für einen Spültisch oder dgl. versehen.
Der Griffhebel 1 steht mit einer bekannten Steuerkartusche 3,
z.B. gemäß der DE-OS 1 550 060 in Verbindung; diese wiederum
ist mittels Zylinderschrauben 2, unter Einfügung von statischen Dichtungen 43 für Eingangsöffnungen 44 für das kalte
und warme Wasser und einen Mischwasserausgang 45 aus einer
Mischkammer 9 auf einem Einsatzstück 12 befestigt. Das
Einsatzstück 12 ist in einem Batteriegehäuse 10,4,7 angeordnet und mit einem Anschlußröhrchen 39 für einen Haushaltsmaschinenanschluß, einem Anschlußröhrchen 36 für das
warme Wasser, einem Anschlußröhrchen 37 für das kalte Wasser
und einem Anschlußröhrchen 38 für das aus der Mischkammer 9
kommende Wasser ausgestattet. Eine Abdeckkappe 4 ist an
einem Gewindering 5 festgeklemmt. Ein Steuerring 7 ist für
eine Absperrung oder Freigabe des zusätzlichen Wasseranschlusses für die Haushaltsmaschine oder dergl. vorgesehen.
Er umschließt oberhalb des Auslaufrings 10 das Einsatzstück
12 und ist zwischen Gleitringen 8 gelagert.

In das Einsatzstück 12 ist von unten ein Absperrventil 13
für den  zusätzlichen Wasseranschluß dicht eingeschraubt.
Das Absperrventil 13 besteht bekannterweise aus einem
Kartuschengehäuse 50, in dem zwei keramische Dichtscheiben
58 und 59 angeordnet sind. An dem Absperrventil 13 ist ein
Steuerteil 14 mittels einer Halteschraube 15 befestigt; dieses
ein Federblech aufweisende Steuerteil 14 greift mit seinem
Ende 52 in eine Ausnehmung 51 des Steuerringes 7 ein und
wird daher beim Verdrehen des Steuerringes 7 betätigt.
Das kalte Wasser gelangt über das Anschlußröhrchen 37 und
einen Zuführkanal 53, der sich in dem Einsatzstück 12 befindet, zu der entsprechenden Eingangsöffnung 44. Der Zuführkanal 53 hat eine Abzweigung 23, durch die Kaltwasser zu einer
Eingangsöffnung 55 des Absperrventils 13 umgelenkt wird,
von wo es bei geöffnetem Absperrventil über die Austrittsöffnung 21 und eine Abzweigung 22 in das Anschlußröhrchen
39 für die Haushaltsmaschine strömt. Das Anschlußröhrchen 36
für das warme Wasser steht mit dem Zuführkanal 57 und der
entsprechenden anderen Eingangsöffnung 44 in Verbindung.

Die Einloch-Einhebelmischbatterie ist mit einem Einsteckstutzen ausgestattet und wird unter Verwendung von zwei
Gummischeiben 17 mittels der Sicherungsmutter 18 an einem
Spültisch oder dergl. befestigt. An das Anschlußröhrchen 38
ist ein Brauseschlauch 27 angeschlossen. Ein Auslauf 24
dient zur Aufnahme des Brauseschlauches 27 und ist auf einem
Gleitring 11 schwenkbar gelagert. Er wird dabei durch einen
O-Ring 16 zusätzlich geführt. Der Brauseschlauch 27 ist
mittels der Handbrause 30 herausziehbar.

Wie ersichtlich, sind die Steuerkartusche 3, das Einsatzstück 12, das Absperrventil 13 sowie dessen Steuerring 7
koaxial angeordnet.

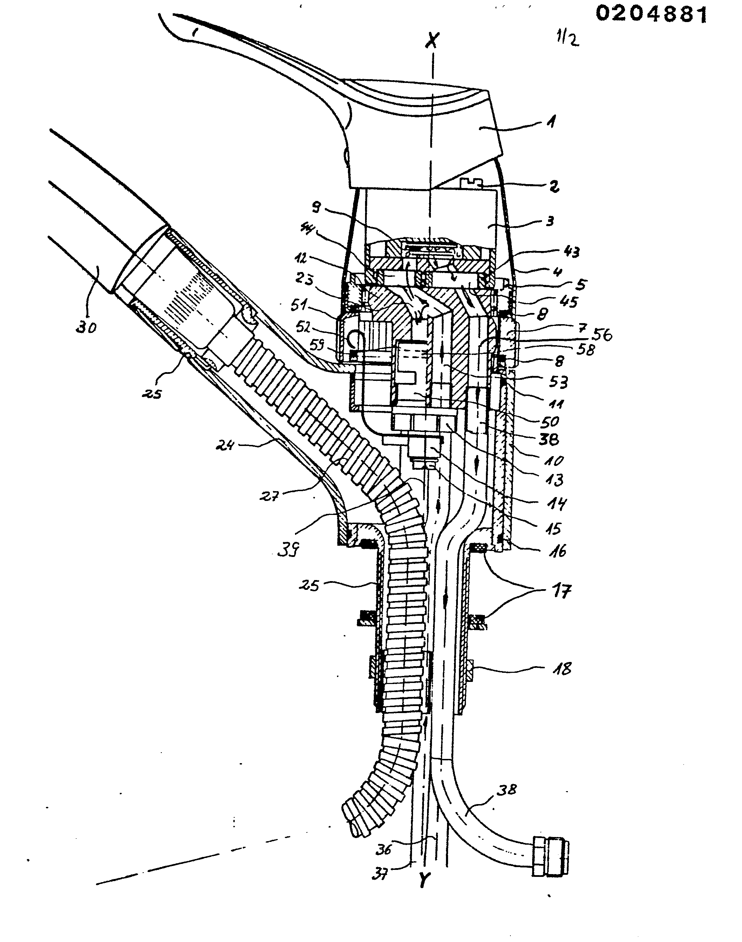

Schließlich ist der Fig. 1 zu entnehmen, daß das untere
Ende des Einsatzstückes 12 mit dem Absperrventil 13 im
oberen Bereich des durch den Auslaufring 10 gebildeten

- 5 -

Teils des Batteriegehäuses vorgesehen ist.

Wie bereits erwähnt, ist die dargestellte und beschriebene
Ausführung nur ein Beispiel zur Verwirklichung der Erfindung,
und diese ist nicht darauf beschränkt, vielmehr sind im
Rahmen des erfindungsgemäßen Grundgedankens insbesondere
hinsichtlich der Gestaltung und Anordnung der einzelnen
Teile auch noch andere Möglichkeiten gegeben. So könnte
statt des Steuerringes 7 auch ein Knopf-, ein Wipp- oder
Schiebeschalter Verwendung finden. Ferner könnte das Absperrventil 13 auch mit Misch- oder Heißwasser beaufschlagt
werden und mit weiteren Anschlußröhrchen in Verbindung
stehen. Hierfür sind lediglich die Kanäle im Einsatzstück 12
entsprechend anzuzapfen.

- Ansprüche -

- 6 -

Patentansprüche

————————————

1. Mischbatterie, insbesondere Einhebelmischbatterie für Spültische oder dergl., mit einem Batteriegehäuse (10,4,7), in dem ein mit einem Anschlußröhrchen (36) für das warme Wasser, einem Anschlußröhrchen (37) für das kalte Wasser und mindestens einem Anschlußröhrchen (39) für den Anschluß einer Haushaltsmaschine versehenes Einsatzstück (12) angeordnet ist, welches mit einem Absperrventil für den Anschluß der Haushaltsmaschine in Verbindung steht, dadurch gekennzeichnet, daß das Absperrventil (13) an oder in dem Einsatzstück (12) gehalten und mit diesem in dem Batteriegehäuse (10,4,7) angeordnet ist, und daß für die Betätigung des Absperrventils (13) ein am Umfang der Mischbatterie befindliches Betätigungsorgan (7) vorgesehen ist.

2. Mischbatterie nach Anspruch 1, dadurch gekennzeichnet, daß das Betätigungsorgan (7) von dem Absperrventil (13) örtlich getrennt ist.

3. Mischbatterie nach den Ansprüchen 1 und 2, dadurch gekennzeichnet, daß das Betätigungsorgan als Steuerring (7) ausgebildet ist.

4. Mischbatterie nach den Ansprüchen 1 bis 3, dadurch gekennzeichnet, daß das Absperrventil (13), das Einsatzstück (12), die Steuerkartusche (3), der Steuerring (7) und das Batteriegehäuse (10,4,7) koaxial vorgesehen sind.

5. Mischbatterie nach einem oder mehreren der vorstehenden Ansprüche, dadurch gekennzeichnet, daß das Absperrventil (13) in einer Kammer (20) des Einsatzstückes (12) angeordnet ist, in dem ein Zuführkanal (53) und ein Abzweigkanal (23) zu der Kammer (20) und von dieser eine Abzweigung (22) zu dem Anschlußröhrchen (39) für die Haushaltsmaschine vorgesehen sind.

6. Mischbatterie nach einem oder mehreren der vorstehenden Ansprüche dadurch gekennzeichnet, daß sie mit einem herausziehbaren, in einem Auslauf (24) gehaltenen Brauseschlauch (27) versehen ist.

7. Mischbatterie nach dem Anspruch 6, dadurch gekennzeichnet, daß der Auslauf (24) feststehend oder schwenkbar ist.

8. Mischbatterie nach einem oder mehreren der vorstehenden Ansprüche dadurch gekennzeichnet, daß ein Steuerteil (14) das Absperrventil (13) mit dem Betätigungsorgan (7) verbindet.

9. Mischbatterie nach Anspruch 8, dadurch gekennzeichnet, daß das Steuerteil (14) ein Federblech aufweist, dessen eines Ende (52) in eine Ausnehmung (51) des Betätigungsorgans (7) ragt, während sein anderes Ende mit einer Spindel des Absperrventils (13) verbunden ist.

10. Mischbatterie nach einem oder mehreren der vorstehenden Ansprüche, dadurch gekennzeichnet, daß das Einsatzstück (12) auf seiner Unterseite mit dem Absperrventil (13) ausgerüstet ist und auf seiner Oberseite die Steuerkartusche (3) trägt.

11. Mischbatterie nach einem oder mehreren der vorstehenden Ansprüche, dadurch gekennzeichnet, daß das untere Ende des Einsatzstückes (12) mit dem Absperrventil (13) im oberen Bereich des durch den Auslaufring (10) gebildeten Teils des Batteriegehäuses (10,4,7) vorgesehen ist.

12. Mischbatterie nach einem oder mehreren der vorstehenden Ansprüche, dadurch gekennzeichnet, daß der Steuerring (7) oberhalb des Auslaufringes (10) angeordnet ist.

Fig. 1

0204881

1/2

Fig. 3

Fig. 2

0204881

Europäisches Patentamt

**EUROPÄISCHER RECHERCHENBERICHT**

Nummer der Anmeldung

| | EINSCHLÄGIGE DOKUMENTE | | EP 86100814.2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE - A1 - 3 243 750 (TA ROKAL GMBH) <br> * Seite 7, Zeilen 10-20; Fig. 1 * <br> -- | 1 | F 16 K 11/00 |
| D,A | EP - A1 - 0 071 729 (KLUDI-ARMATU-TUREN P. SCHEFFER) <br> * Gesamt * <br> -- | 1 | |
| A | DE - B2 - 2 653 754 (W. SCHAER) <br> * Spalte 5, Zeile 63 - Spalte 7, Zeile 7; Fig. 1 * <br> -- | 1 | |
| A | US - A - 3 736 959 (PARKISON) <br> * Spalte 4, Zeilen 45-64; Fig. 1 * <br> -- | 1 | |

RECHERCHIERTE SACHGEBIETE (Int. Cl.4)

| Kategorie | Kennzeichnung | Betrifft | Sachgebiete |
|---|---|---|---|
| A | DE - A1 - 3 022 706 (HANSA METALL-WERKE AG) <br> * Seite 9, Zeile 10 - Seite 10, Zeile 22; Fig. 1 * <br> ---- | 1,67 | F 16 K 11/00 <br> E 03 C 1/00 |

Der vorliegende Recherchenbericht wurde für alle Patentansprüche erstellt.

| Recherchenort | Abschlußdatum der Recherche | Prüfer |
|---|---|---|
| WIEN | 22-08-1986 | ROUSSARIAN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82